# EUROPEAN PATENT SPECIFICATION

(11) **EP 4 031 719 B1**
(45) Date of publication and mention of the grant of the patent: **24.12.2025**
(21) Application number: 20865322.0
(22) Date of filing: 21.09.2020
(51) Int. Cl.: E03D 5/01, E03D 11/13, E03D 11/17, F16L 37/086, F16L 37/088

(54) **QUICK RELEASE MOTOR/PUMP ASSEMBLY FOR ELECTRIC MARINE TOILET**
SCHNELL LÖSBARE MOTORPUMPENEINHEIT FÜR EINE ELEKTRISCHE SCHIFFSTOILETTE
ENSEMBLE MOTEUR/POMPE À LIBÉRATION RAPIDE DE TOILETTES MARINES ÉLECTRIQUES

(30) Priority: 19.09.2019 US 201962902580 P
(43) Date of publication of application: 27.07.2022
(73) Proprietor: Flow Control LLC., Beverly, Massachusetts 01915 (US)
(72) Inventor: MEZA, Humberto V., Trabuco Canyon, CA 92679 (US); EDMOND, Matthew, Hitchin, Hertfordshire SG4 8RT (GB)
(74) Representative: Wörz, Volker Alfred
(86) International application number: PCT/US2020/051734
(87) International publication number: WO 2021/055921

(56) References cited:
- EP-A1- 0 593 937
- WO-A2-2007/124736
- JP-A- H10 316 086
- US-A- 3 514 231
- US-A- 3 699 592
- US-A- 4 672 690
- US-A- 6 085 364
- US-A- 953 061
- US-A1- 2004 051 313
- US-A1- 2013 205 489
- US-A1- 2017 362 808

## Description

### CROSS-REFERENCE TO RELATED APPLICATION

This application claims benefit to provisional patent application serial no. 62/902,580, filed 19 September 2019.

### BACKGROUND OF THE INVENTION

### 1. Field of the Invention

The present invention relates to apparatus having a toilet base coupled to a motor and pump assembly according to the preamble of claim 1. Such an apparatus is known from US 2017/ 362 808 A as well as from JP H10-316 086 A.

### 2. Brief Description of Related Art

There is no product known to the inventors that allows a user to release the pump and motor assembly from a toilet base to enable fast access to service/maintain the toilet. In view of this, it is an object of the present invention to provide for a better way to release a motor and pump assembly from a toilet to enable fast access to service/maintain the toilet.

### SUMMARY OF THE PRESENT INVENTION

The object is solved by the apparatus comprising the features of claim 1. In summary, the present invention provides a toilet base assembly that allows a user to perform fast servicing without the use of tools. On all electric marine toilets known to the inventors, a series of screws have to be removed to allow access to the pump housing and impeller to remove blockages or service the toilet. According to the present invention, the pump and motor assembly will be removed by releasing a clip mechanism that holds the pump and motor assembly in place when in operation. The clip mechanism includes a clip that is manually inserted and removed, whereby the clip may be a a spring-loaded clip.

### Particular Embodiments

The present invention includes, or takes the form of, an apparatus featuring a toilet base, a pump and motor assembly and a quick release coupling mechanism.

The toilet base has a wall forming a chamber for receiving waste, the wall having a toilet base coupling portion.

The pump and motor assembly includes a pump inlet configured to receive the waste pumped from the chamber. The pump inlet includes a pump inlet coupling portion arranged inside the toilet base coupling portion when the pump and motor assembly and the toilet base are coupled together.

The quick release coupling mechanism includes a clip receiving portion and a clip. The clip is configured to slide within the clip receiving portion from a disengage position to an engage position to engage the pump inlet coupling portion and couple the toilet base and the pump and motor assembly together. The clip is also configured to slide from the engage position to the disengage position to disengage the pump inlet coupling portion and to decouple the pump and motor assembly from the toilet base. It is referred to the features of independent claim 1.

### Other Features

The apparatus may include one or more of the following features as are claimed by the appended claims:
The quick release coupling mechanism may be mounted on the toilet base, and/or may form part of the toilet base coupling portion. The present invention includes The quick release coupling mechanism on the pump and motor assembly having a corresponding toilet base coupling portion arranged inside a corresponding pump inlet coupling portion.

The clip receiving portion may include a slot configured or formed therein to receive the clip; and the clip may be configured to slide within the slot of the clip receiving portion.

The clip receiving portion may include an opening configured or formed therein; the pump inlet coupling portion may include a rim configured to pass through the opening formed in the clip receiving portion and into the toilet base coupling portion of the wall of the toilet base. The clip may be configured to slide within the clip receiving portion from the disengage position to the engage position and engage the rim to couple together the toilet base and the pump and motor assembly.

The quick release coupling mechanism may include a spring configured to expand when the clip slides from the disengage position to the engage position to push and hold the clip in the engage position, and also configured to compress when the clip slides from the engage position to the disengage position to urge the spring back towards the engage position when the clip is released.

The clip may include a clip engaging portion configured to engage the rim when the clip slides from the disengage position to the engage position, and also configured to disengage the rim when the clip slides from the engage position to the disengage position.

The clip may include a clip release portion having an opening configured to allow the pump inlet coupling portion to pass thru when the clip slides into the disengage position for releasing the pump and motor assembly from the toilet base, and also for positioning the pump inlet coupling portion for engagement.

The pump and motor assembly may include a pump outlet having a pump outlet coupling portion configured or formed thereon to provide the waste from the pump and motor assembly. The apparatus may include a discharge fitting having a quick release discharge fitting coupling mechanism with a discharge fitting clip receiving portion and a discharge fitting clip. The discharge fitting clip may be configured to slide within the discharge fitting clip receiving portion from a discharge fitting disengage position to a discharge fitting engage position to engage the pump outlet coupling portion and couple the discharge fitting and the pump and motor assembly together. The discharge fitting clip may also be configured to slide from the discharge fitting engage position to the discharge fitting disengage position to disengage the pump outlet coupling portion and decouple the discharge fitting from the pump and motor assembly.

The discharge fitting clip receiving portion may include a discharge fitting slot configured or formed therein to receive the discharge fitting clip; and the discharge fitting clip may be configured to slide within the discharge fitting slot.

The discharge fitting clip receiving portion may include an opening configured or formed therein. The pump outlet coupling portion may include a pump outlet rim configured to pass through the opening formed in the discharge fitting clip receiving portion and into the discharge fitting. The discharge fitting clip may be configured to slide within the discharge fitting clip receiving portion from the discharge fitting disengage position to the discharge fitting engage position to engage the pump outlet rim to couple together the pump and motor assembly and the discharge fitting.

The quick release discharge fitting coupling mechanism may include a discharge fitting spring that is configured to expand when the discharge fitting clip slides from the discharge fitting disengage position to the discharge fitting engage position to push and hold the discharge fitting clip in the discharge fitting engage position. The discharge fitting spring may also be configured to compress when the discharge fitting clip slides from the discharge fitting engage position to the discharge fitting disengage position to urge the discharge fitting spring back towards the discharge fitting engage position.

The discharge fitting clip may include a discharge fitting clip engaging portion configured to engage the pump outlet rim when the discharge fitting clip slides from the discharge fitting disengage position to the discharge fitting engage position, and also configured to disengage the pump outlet rim when the discharge fitting clip slides from the discharge fitting engage position to the discharge fitting disengage position.

The discharge fitting clip may include a discharge fitting release portion having an opening configured to allow the pump outlet coupling portion to pass thru when the discharge fitting clip slides into the discharge fitting disengage position for releasing the discharge fitting from the pump and motor assembly, and for also positioning the pump outlet coupling portion for engagement.

The apparatus is configured to a toilet, which may include an electric toilet, e.g., such as a marine electric toilet or a recreational vehicle (RV) electric toilet.

### BRIEF DESCRIPTION OF THE DRAWING

The drawing, which is not necessarily drawn to scale, includes the following Figures:

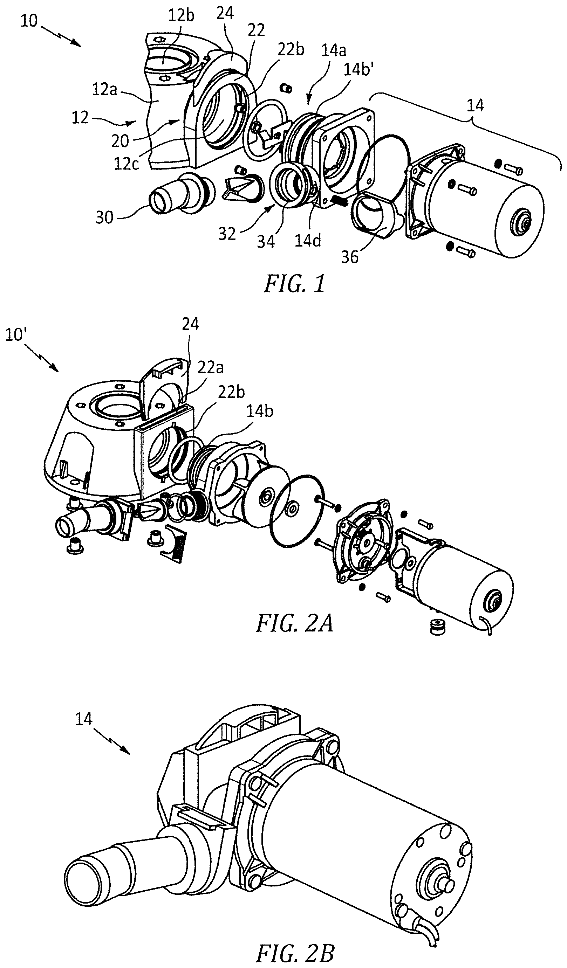

Figure 1 shows an exploded view of apparatus having a quick release pump and motor assembly connected to a toilet base that may form part of an electric marine toilet, e.g., having a clip for engaging/releasing the pump and motor assembly to/from the toilet base, and having a discharge fitting clip with a spring configuration for engaging/releasing a discharge fitting to/from the pump and motor assembly, according to some embodiments of the present invention.

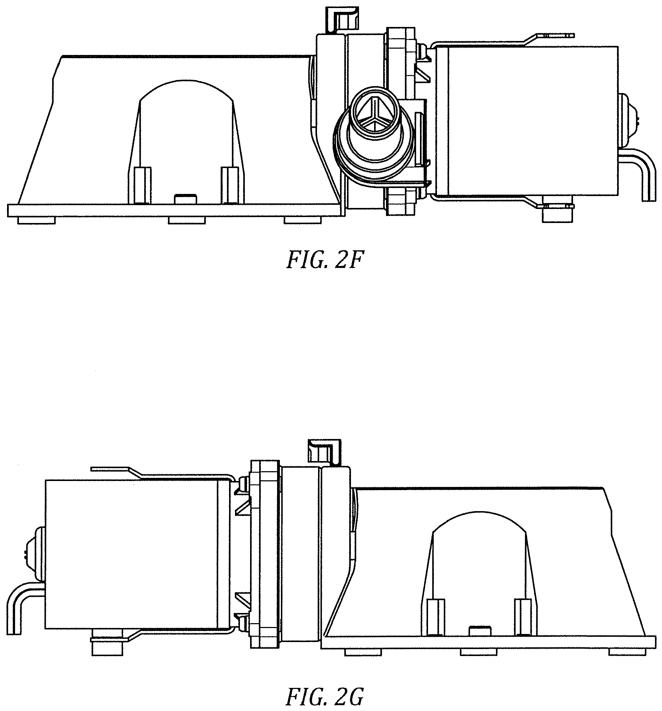

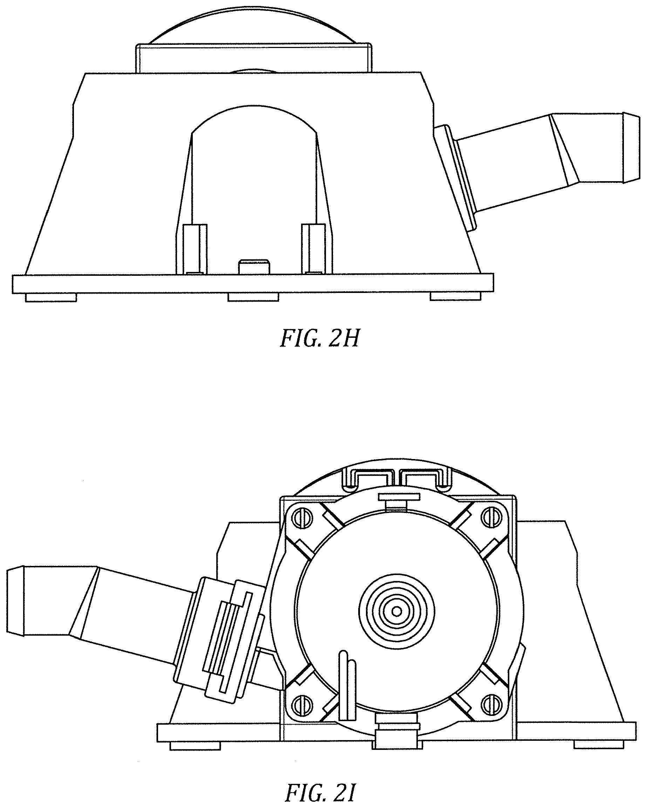

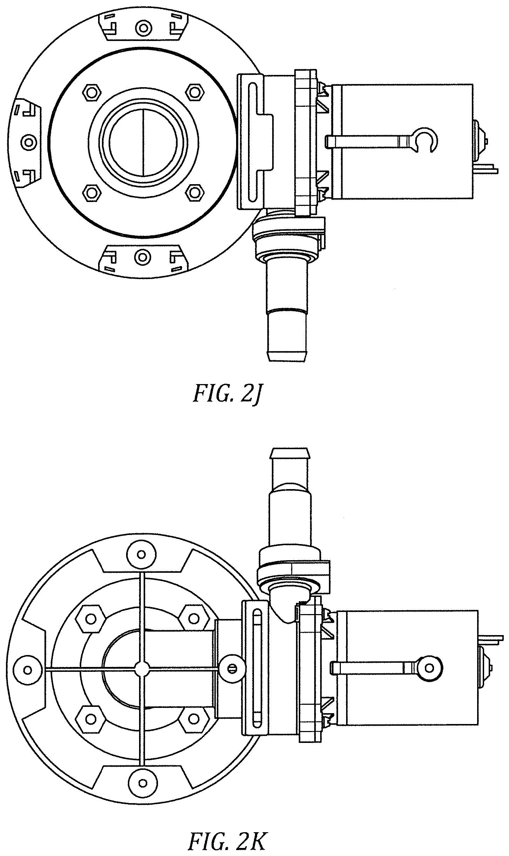

Figure 2A shows an exploded view of apparatus including a quick release pump and motor assembly connected to a toilet base that may form part of an electric marine toilet, e.g., having a clip for engaging/releasing a pump and motor assembly to/from the toilet base, and having a discharge fitting clip for engaging/releasing a discharge fitting to/from the pump and motor assembly, according to some embodiments of the present invention.
Figure 2B shows a photograph of the quick release pump and motor assembly shown in Figure 2A as assembled for connecting to the toilet base, according to some embodiments of the present invention.

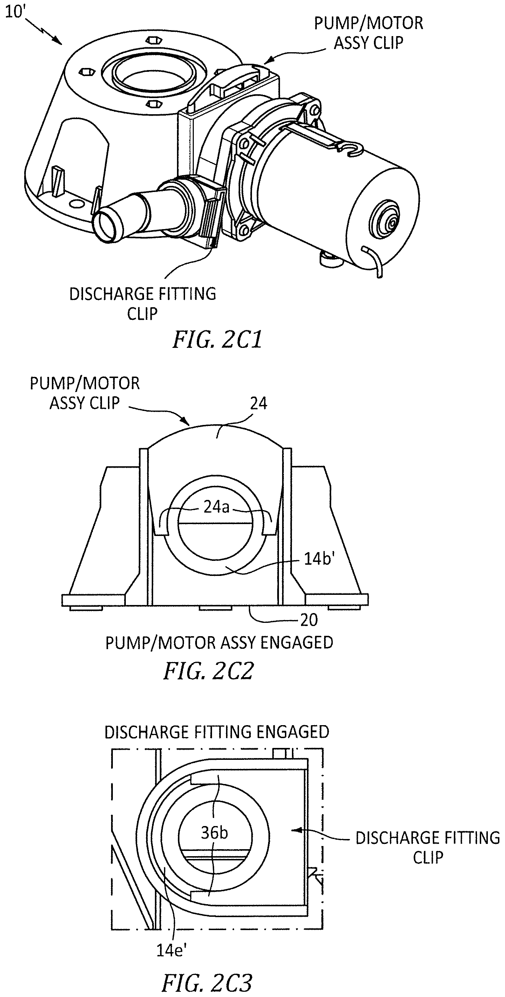

Figure 2C1 shows a perspective view of the apparatus shown in Figure 2A as assembled, e.g., having the clip pushed in for coupling the pump and motor assembly and the toilet base, and also having the discharge fitting clip pushed in for coupling the discharge fitting and the pump and motor assembly, according to some embodiments of the present invention.
Figure 2C2 is a cross-sectional view of a quick release coupling mechanism showing the clip engaging part of a pump inlet of the pump and motor assembly shown in Figure 2C1 for connecting the pump and motor assembly to the toilet base, according to some embodiments of the present invention.
Figure 2C3 is a cross-sectional view of a quick release discharge fitting coupling mechanism showing the discharge fitting clip engaging part of a pump outlet of the pump and motor assembly shown in Figure 2C1 for connecting the pump and motor assembly and the discharge fitting, according to some embodiments of the present invention.

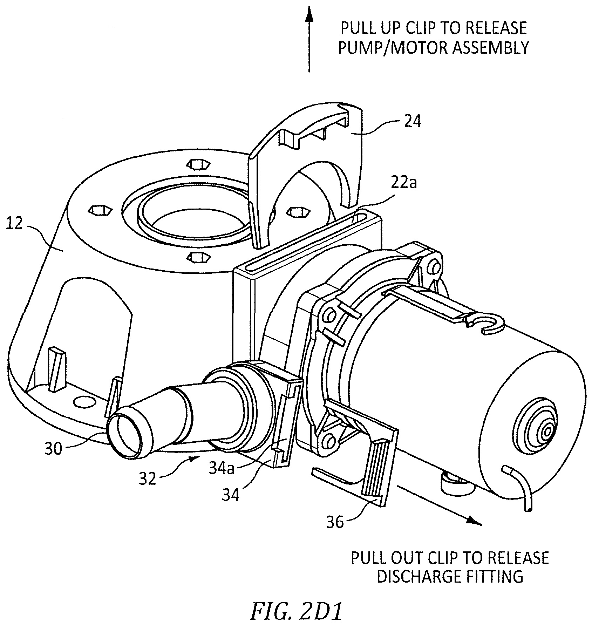

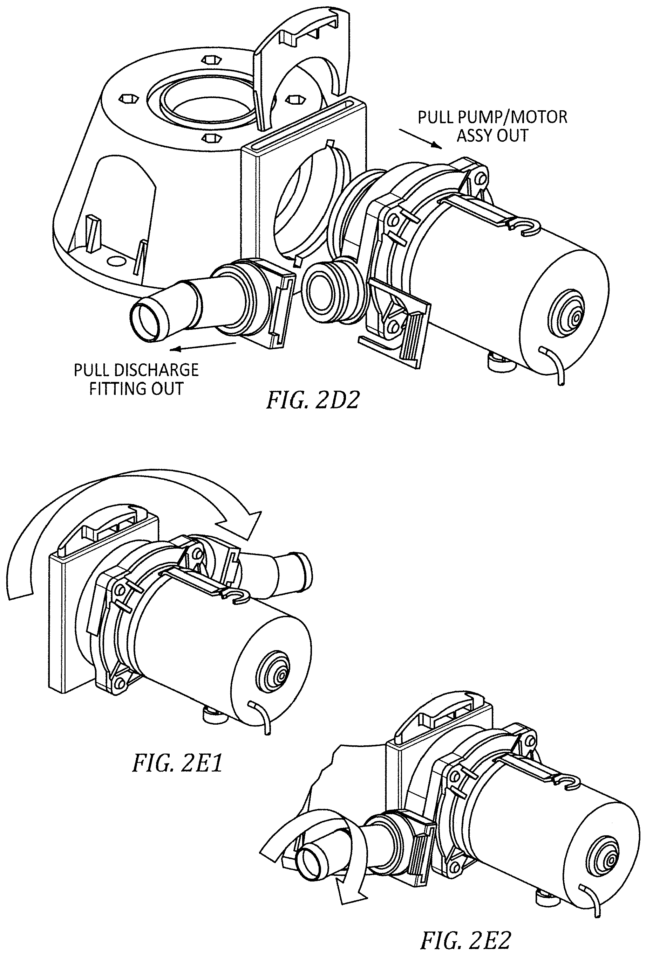

Figure 2D1 shows a perspective view of the apparatus shown in Figure 2C1, e.g., having the clip pulled out for disengaging the clip from part of the pump inlet of the pump and motor assembly and releasing the pump and motor assembly from the toilet base, and also having the discharge fitting clip pulled out for disengaging the discharge fitting clip from part of the pump outlet of the pump and motor assembly and releasing the discharge fitting from the pump and motor assembly, according to some embodiments of the present invention.
Figure 2D2 shows an exploded view of the apparatus shown in Figure 2D1, e.g., having the pump and motor assembly pulled out from the toilet base, and also having the discharge fitting pulled out of the pump outlet of the pump and motor assembly, according to some embodiments of the present invention.
Figure 2E1 shows a partial perspective view of the apparatus shown in Figure 2C1, e.g., having a discharge fitting configured to be rotated between 0° - 180° in relation to, and about a longitudinal axis of, the pump inlet, to orient the discharge fitting in opposite directions as needed depending on the application, according to some embodiments of the present invention.
Figure 2E2 shows a partial perspective view of the apparatus shown in Figure 2C1, e.g., having the discharge fitting configured to be rotated 360° in relation to, and about a corresponding longitudinal axis of, the pump outlet, to swivel the discharge fitting as needed depending on the application, according to some embodiments of the present invention.
Figure 2F shows a side view of the apparatus shown in Figure 2C1, according to some embodiments of the present invention.
Figure 2G shows a corresponding side view of the apparatus shown in Figure 2C1 from the opposite side, according to some embodiments of the present invention.
Figure 2H shows a back view of the apparatus shown in Figure 2C1, according to some embodiments of the present invention.
Figure 2I shows a front view of the apparatus shown in Figure 2C1, according to some embodiments of the present invention.
Figure 2J shows a top view of the apparatus shown in Figure 2C1, according to some embodiments of the present invention.
Figure 2K shows a bottom view of the apparatus shown in Figure 2C1, according to some embodiments of the present invention.
Figure 3A shows a photograph of apparatus, including a quick release pump and motor assembly connected to a toilet base that may form part of an electric marine toilet, according to some embodiments of the present invention.
Figure 3B1 shows a perspective view of the apparatus shown in Figure 3A, e.g., having a clip and spring configuration for engaging/releasing part of a pump inlet of a pump and motor assembly for connecting the pump and motor assembly to/from the toilet base, and also having a discharge fitting clip and spring configuration for engaging/releasing part of a pump outlet for connecting the discharge fitting to/from the pump and motor assembly, according to some embodiments of the present invention.

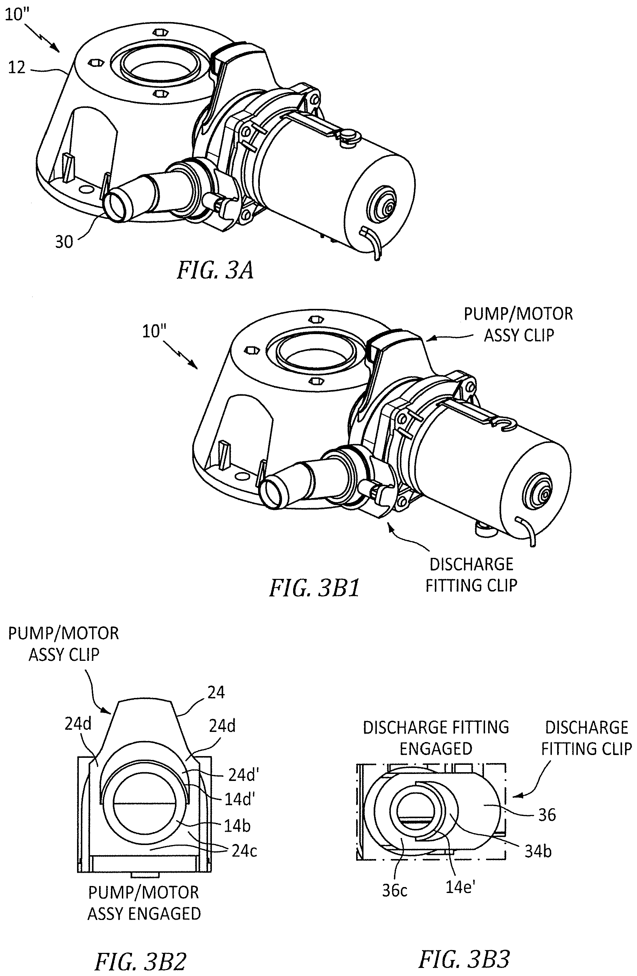

Figure 3B2 is a cross-sectional view of the quick release coupling mechanism showing the clip engaging part of the pump inlet of the pump and motor assembly shown in Figure 3B1 for coupling the pump and motor assembly and the toilet base, according to some embodiments of the present invention.
Figure 3B3 is a cross-sectional view of the quick release discharge fitting coupling mechanism showing the discharge fitting clip engaging part of the pump outlet of the pump and motor assembly shown in Figure 3B1 for coupling the discharge fitting and pump and motor assembly, according to some embodiments of the present invention.

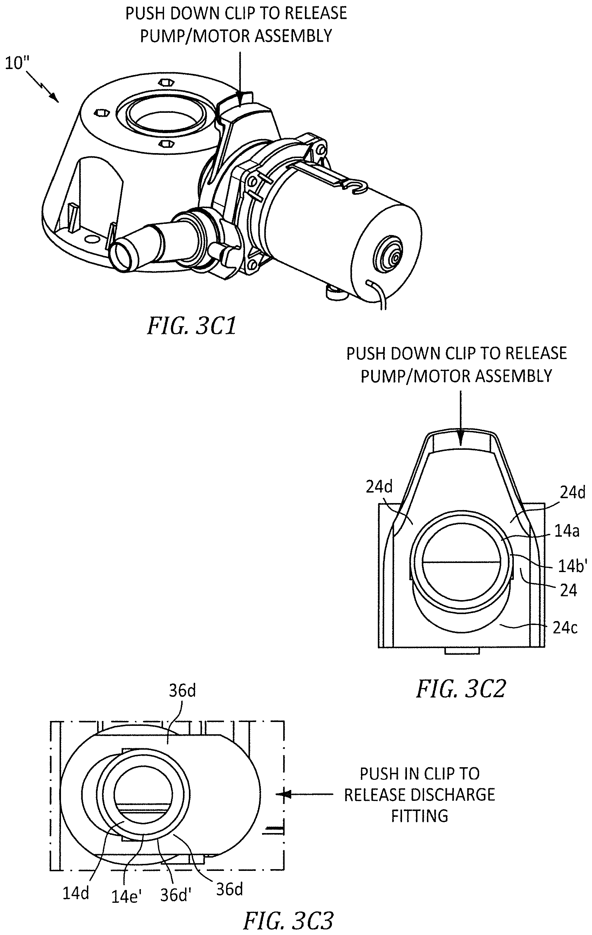

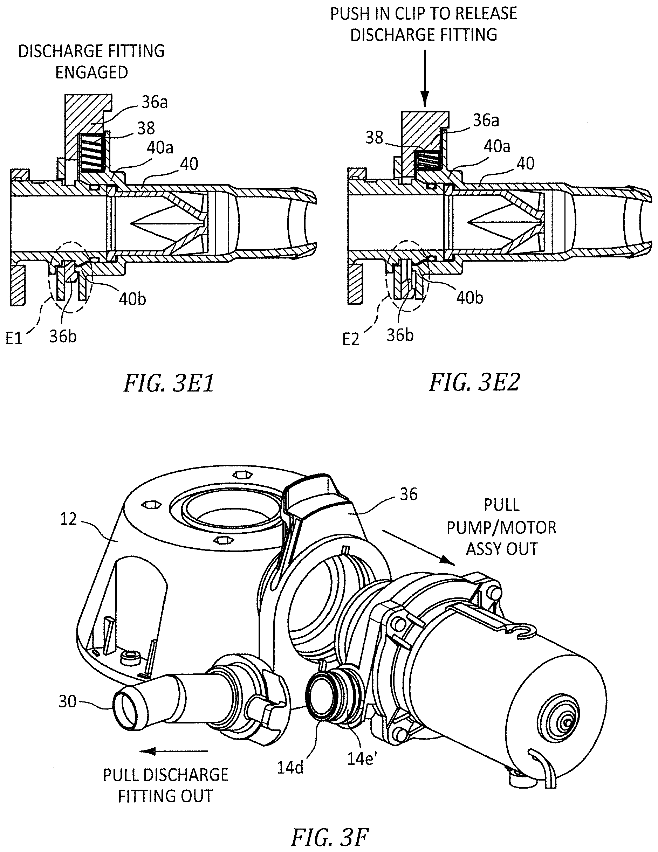

Figure 3C1 shows a perspective view of the apparatus shown in Figure 3A, e.g., having the clip pushed in for compressing the spring, disengaging the clip from part of the pump inlet of the pump and motor assembly, and releasing the pump and motor assembly from the toilet base, and also having the discharge fitting clip pushed in for compressing the discharge fitting spring, disengaging the discharge fitting clip from part of the pump outlet of the pump and motor assembly, and releasing the discharge fitting from part of the pump outlet of the pump and motor assembly, according to some embodiments of the present invention.
Figure 3C2 is a cross-sectional view of the quick release coupling mechanism showing the clip engaging part of the pump inlet of the pump and motor assembly shown in Figure 3C1 for connecting the pump and motor assembly to the toilet base, according to some embodiments of the present invention.
Figure 3C3 is a cross-sectional view of the quick release discharge fitting coupling mechanism showing the discharge fitting clip engaging part of the pump outlet of the pump and motor assembly shown in Figure 3C1 for coupling the pump and motor assembly to the discharge fitting, according to some embodiments of the present invention.

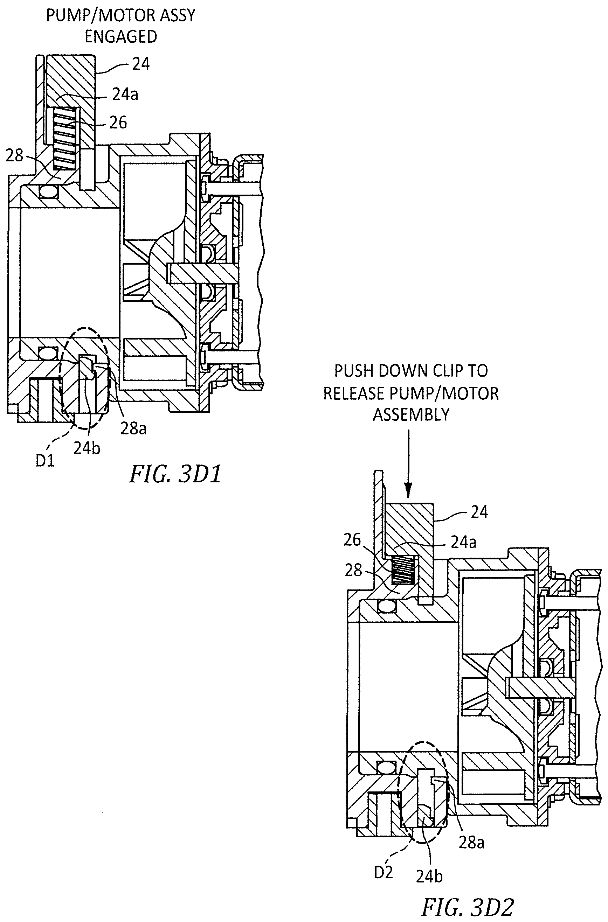

Figure 3D1 is a cross-sectional view showing part of the pump and motor assembly and the quick release coupling mechanism shown in Figure 3C1, e.g., having the clip pushed out by the spring for engaging part of the pump inlet of the pump and motor assembly and for coupling the pump and motor assembly and the toilet base, according to some embodiments of the present invention.
Figure 3D2 is a cross-sectional view showing part of the pump and motor assembly and the quick release coupling mechanism shown in Figure 3C1, e.g., having the clip pushed in for compressing the spring, disengaging the clip from part of the pump inlet of the pump and motor assembly, and releasing the pump and motor assembly from the toilet base, according to some embodiments of the present invention. (In Figure 3D2, the seven (7) "phantom" dots shown in the clip indicate where the spring extended before being compressed, and do not indicate any connection between the clip and the pump and motor assembly spring.)
Figure 3E1 is a cross-sectional view of part of the pump and motor assembly and the quick release discharge fitting coupling mechanism shown in Figure 3C1, e.g., having the discharge fitting clip pushed out by the discharge fitting spring for engaging part of the pump outlet of the pump and motor assembly and for coupling the discharge fitting and the pump and motor assembly, according to some embodiments of the present invention.
Figure 3E2 is a cross-sectional view of part of the pump and motor assembly and the quick release discharge fitting coupling mechanism shown in Figure 3C1, e.g., having the discharge fitting clip pushed in for compressing the discharge fitting spring, disengaging the discharge fitting clip from part of the pump outlet of the pump and motor assembly, and releasing the discharge fitting from the pump and motor assembly, according to some embodiments of the present invention. (In Figure 3E2, the six (6) "phantom" dots shown in the discharge fitting clip indicate where the discharge fitting spring extended before being compressed, and do not indicate any connection between the discharge fitting clip and the discharge fitting spring.)
Figure 3F shows an exploded view of the apparatus shown in Figure 3C1, e.g., having the pump inlet of the pump and motor assembly pulled out from the toilet base, and also having the discharge fitting pulled out of the pump outlet of the pump and motor assembly, according to some embodiments of the present invention.

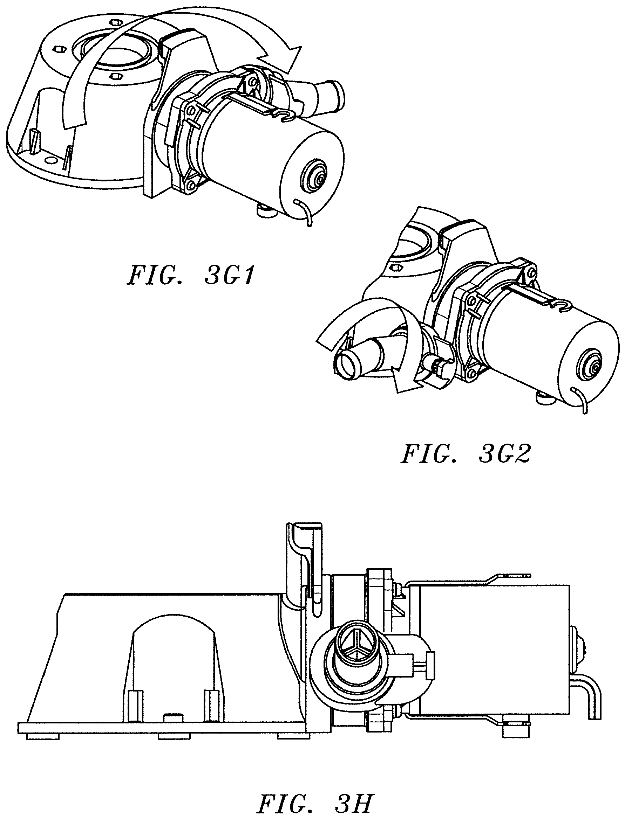

Figure 3G1 shows a partial perspective view of the apparatus shown in Figure 3C1, e.g., having a discharge fitting portion of the quick release pump and motor assembly configured to be rotated between 0° - 180° in relation to, and about a longitudinal axis of, the pump and motor assembly, to orient the discharge fitting in opposite directions as needed depending on the application, according to some embodiments of the present invention.
Figure 3G2 shows a partial perspective view of the apparatus shown in Figure 3C1, e.g., having the discharge fitting configured to be rotated 360° in relation to, and about a corresponding longitudinal axis of, the pump outlet, to swivel the discharge fitting as needed depending on the application, according to some embodiments of the present invention.
Figure 3H shows a side view of the apparatus shown in Figure 3C1, according to some embodiments of the present invention.

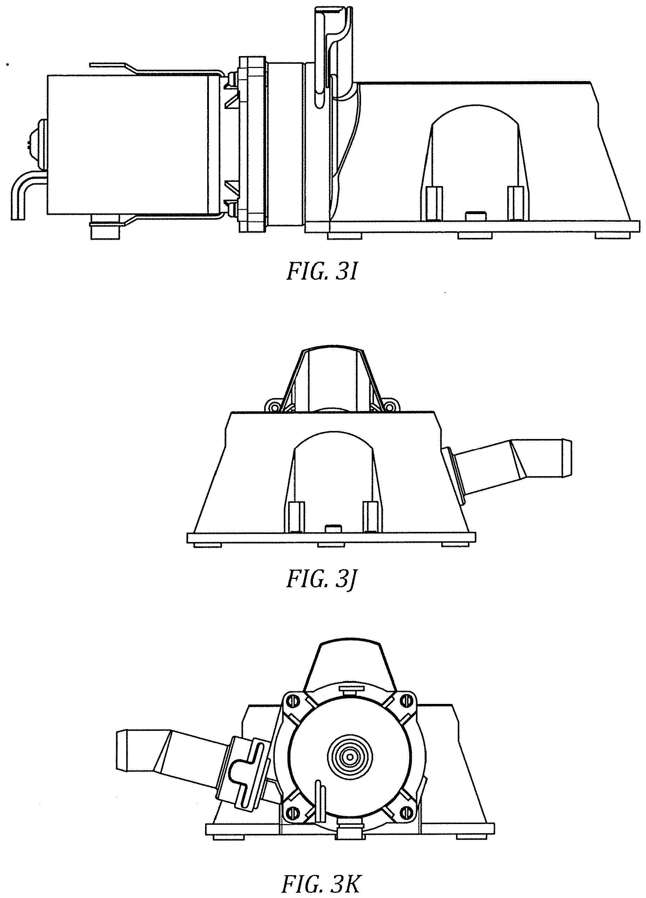

Figure 3I shows a corresponding side view of the apparatus shown in Figure 3C1 from the opposite side, according to some embodiments of the present invention.
Figure 3J shows a back view of the apparatus shown in Figure 3C1, according to some embodiments of the present invention.
Figure 3K shows a front view of the apparatus shown in Figure 3C1, according to some embodiments of the present invention.

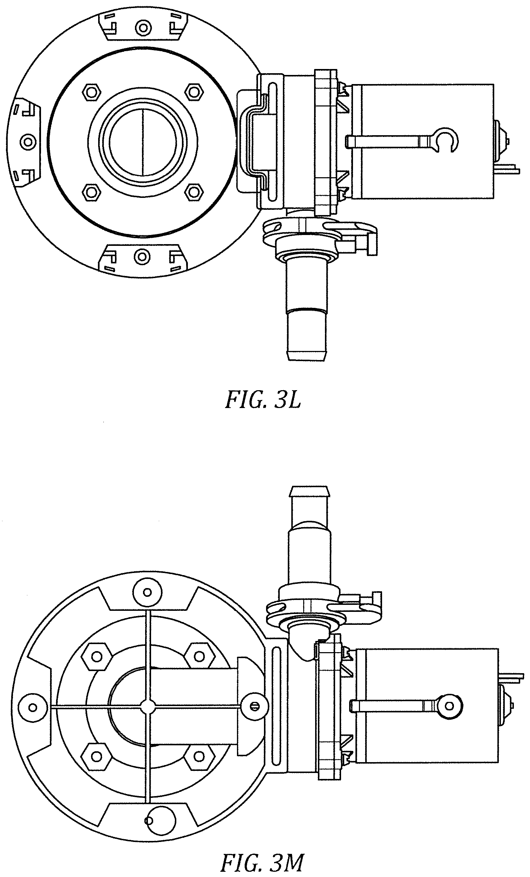

Figure 3L shows a top view of the apparatus shown in Figure 3C1, according to some embodiments of the present invention.
Figure 3M shows a bottom view of the apparatus shown in Figure 3C1, according to some embodiments of the present invention.

Similar parts or components in Figures are labeled with similar reference numerals and labels for consistency. Every lead line and associated reference label for every element is not included in every Figure of the drawing to reduce clutter in the drawing as a whole.

### DETAILED DESCRIPTION OF THE INVENTION

By way of example, Figures 1, 2A thru 2K and 3A thru 3M show different embodiments of the present invention, which includes, or takes the form of, apparatus generally indicated as 10, 10', 10" featuring a toilet base 12, a pump and motor assembly 14 and a quick release coupling mechanism generally indicated as 20. The apparatus 10 is configured for a toilet, which may include an electric toilet, e.g., such as a marine electric toilet or a recreational vehicle (RV) electric toilet. The upper part of the electric toilet is not shown, does not form part of the underlying invention, and may include some combination of a toilet bowl, a toilet seat, a flushing mechanism, etc.

### The Basic Invention

The toilet base 12 includes a wall 12a forming a chamber 12b for receiving waste. The wall 12a is configured with, or includes, a toilet base coupling portion 12c, e.g., consistent with that set forth herein.

The pump and motor assembly 14 includes a pump inlet generally indicated as 14a configured to receive the waste pumped from the chamber 12b. The pump inlet 14a includes a pump inlet coupling portion 14b (e.g., see Fig. 2A) arranged inside the toilet base coupling portion 12c when the pump and motor assembly 14 and the toilet base 12 are coupled together.

The quick release coupling mechanism 20 includes a clip receiving portion 22 and a clip 24. The clip 24 is configured to slide within the clip receiving portion 22 from a disengage position (see Fig. 2D1, 3C2) to an engage position (see Fig. 2C2, 3B2) to engage the pump inlet coupling portion 14b and couple the toilet base 12 and the pump and motor assembly 14 together. The clip 24 is also configured to slide from the engage position (see Fig. 2C2, 3B2) to the disengage position (seeFig. 2D1, 3C2) to disengage the pump inlet coupling portion 14b and decouple the pump and motor assembly 14 from the toilet base 12.

The quick release coupling mechanism 20 may be mounted on the toilet base 12, and/or may include, or may form part of the toilet base coupling portion 12c, e.g., consistent with that disclosed herein.

The clip receiving portion 22 may include a slot 22a (e.g., see Fig. 2A) configured or formed therein to receive the clip 24. The clip 24 may be configured to slide within the slot 22a of the clip receiving portion 22.

The clip receiving portion 22 may include an opening 22b configured or formed therein. The pump inlet coupling portion 14b may include a rim b' configured and dimensioned to pass through the opening 22b formed in the clip receiving portion 22 and into the toilet base coupling portion 12c of the toilet base 12. The clip 24 may be configured to slide within the clip receiving portion 22 from the disengage position (see Fig. 3C2) to the engage position (see Fig. 2C2, 3B2) to engage the rim Mb' to couple together the toilet base 12 and the pump and motor assembly 14.

The quick release coupling mechanism 20 may include a spring 26 (see 3D1, 3D2) configured to expand when the clip 24 slides from the disengage position (see Fig. 3C2) to the engage position (see Fig. 3B2) to push and hold the clip 24 in the engage position. The spring 26 (see 3D1, 3D2) may also be configured to compress when the clip 24 is pressed and slides from the engage position to the disengage position to urge the spring 26 back towards the engage position. The spring 26 may be configured between a top portion 24a of the clip 24 and an interior portion 28 of the quick release coupling mechanism 20, e.g., as shown in Figures 3D1, 3D2. Circled portion D1 show a lower portion of the clip 24 having a detente 24b for sliding and contacting a corresponding detent 28a of the interior portion 28 of the quick release coupling mechanism 20 for stopping and keeping the clip 24 within the slot 22a when the clip 24 is in the engage position. Circled portion D2 show the detente 24b of the clip 24 separated from the corresponding detent 28a of the interior portion 28 when the clip 24 is in the disengage position. (It is important to note that in operation the clip 24 and detente 24b are configured to slide in relation to the corresponding detent 28a of the interior portion 28, and are not connect together with the corresponding detent 28a of the interior portion 28.)

The clip 24 may include a clip engaging portion 24c (see Fig. 3B2) configured to engage the rim b' when the clip 24 slides from the disengage position (see Fig. 3C2) to the engage position (see Fig. 3B2), and also configured to disengage the rim Mb' when the clip 24 slides from the engage position to the disengage position. (In Figure 3B2, a lower part (not shown) of the rim Mb' is engaged and covered by part of the clip engaging portion 24c of the clip 24.)

The clip 24 may include a clip release portion 24d having an opening 24d' configured to allow the rim Mb' to pass thru when the clip 24 slides into the disengage position (see Fig. 3C2) for releasing the pump and motor assembly 14 from the toilet base 12, and also for positioning the pump inlet coupling portion 14b and rim b' for engagement. (In Figure 3C2, the rim Mb' is not engaged by any part of the clip - release portion 24d of the clip 24.)

The pump and motor assembly 14 may include a pump outlet 14d (see Fig. 1) having a pump outlet coupling portion 14e (Fig. 3F) configured or formed thereon to provide the waste from the pump and motor assembly 14.

The apparatus 10 may also include a discharge fitting 30 having a quick release discharge fitting coupling mechanism 32 with a discharge fitting clip receiving portion 34 (Fig. 2D1) and a discharge fitting clip 36, e.g., consistent with that shown in Figures 2D1, 2D2. The discharge fitting clip 36 may be configured to slide within the discharge fitting clip receiving portion 34 from a discharge fitting disengage position (see Fig. 3C3) to a discharge fitting engage position (see Fig. 2C3, 3B3) to engage the pump outlet coupling portion 14e and couple the discharge fitting 30 and the pump and motor assembly 14 together. The discharge fitting clip 36 may also be configured to slide from the discharge fitting engage position (see Fig. 2C2, 3B3) to the discharge fitting disengage position (see Fig. 3C3) to disengage the pump outlet coupling portion 14e and decouple the discharge fitting 30 from the pump and motor assembly 14.

The discharge fitting clip receiving portion 34 may include a discharge fitting slot 34a (Figs. 2D1, 2D2) configured or formed therein to receive the discharge fitting clip 36. The discharge fitting clip 36 may be configured to slide within the discharge fitting slot 34a.

The discharge fitting clip receiving portion 34 may include an opening 34b configured or formed therein. The pump outlet coupling portion 14e (see 3F) may include a pump outlet rim 14e' configured to pass through the opening 34b formed in the discharge fitting clip receiving portion 34 and into the discharge fitting 30. The discharge fitting clip 30 may be configured to slide within the discharge fitting clip receiving portion 34 from the discharge fitting disengage position (see Fig. 3C3) to the discharge fitting engage position (see Fig. 2C3, 3B3) to engage the pump outlet rim 14e' of the pump outlet 14d to couple together the pump and motor assembly 14 and the discharge fitting 30.

The quick release discharge fitting coupling mechanism 32 may include a discharge fitting spring 38 (see Fig. 3E1, 3E2) that is configured to expand when the discharge fitting clip 36 is pressed and slides from the discharge fitting disengage position (see Fig. 3C3) to the discharge fitting engage position (see Fig. 3B3) to push and hold the discharge fitting clip 36 in the discharge fitting engage position. The discharge fitting spring 38 may also be configured to compress when the discharge fitting clip 36 slides from the discharge fitting engage position to the discharge fitting disengage position to urge the discharge fitting spring 38 back towards the discharge fitting engage position. Similar to the clip 24, the spring 38 may be configured between a top portion 36a of the clip 36 and a top portion 40a of a discharge fitting housing 40, e.g., as shown in Figures 3E1, 3E2. Circled portion E1 shows the discharge fitting clip 36 having a detente 36b for engaging a corresponding detente 40b of the discharge fitting housing 40 for retaining the discharge fitting clip 36 within the discharge fitting slot 34a. Circled portion E2 show the detente 40b separated from the corresponding detent 36b when the discharge fitting clip 36 is in the disengage position. In operation, the clip 36 and detente 36b are configured to slide in relation to the corresponding detent 40b and the discharge fitting housing 40.

The discharge fitting clip 36 may include a discharge fitting clip engaging portion 36C (Fig. 3B3) configured to engage the pump outlet rim 14e' when the discharge fitting clip 36 slides from the discharge fitting disengage position (see Fig. 3C3) to the discharge fitting engage position (see Fig. 3B3), and also configured to disengage the pump outlet rim 14e' when the discharge fitting clip 36 slides from the discharge fitting engage position to the discharge fitting disengage position.

The discharge fitting clip 36 may include a discharge fitting release portion 36d (Fig. 3C3) having an opening 36d' configured to allow the pump outlet coupling portion 14e to pass thru when the discharge fitting clip 36 slides into the discharge fitting disengage position (see Fig. 3C3) for releasing the discharge fitting 30 from the pump and motor assembly 14, and for also positioning the pump outlet coupling portion 14e for engagement.

### Other Components/Parts

As one skilled in the art would appreciate, the drawing includes other components/parts that are not labeled or described to reduce clutter in the Figures, and do not form part of the underlying invention, e.g., including O-rings (Fig. 1) for sealing the pump inlet 14a in relation to the toilet base coupling portion 12c; nuts and bolts for coupling different parts of pump, motor and the pump and motor assembly together; etc.

### Possible Applications:

Possible applications may include marine electric toilets for vessel, or Recreational Vehicle (RV) electric toilets, etc.

### The Invention

The embodiments shown and described in detail herein are provided by way of example only; and the invention is not intended to be limited to the particular configurations, dimensionalities, and/or design details of these parts or elements included herein. In other words, one skilled in the art would appreciate that design changes to these embodiments may be made and such that the resulting embodiments would be different than the embodiments disclosed herein, but would still be within the present invention defined by the appended claims.

## Claims

1. Apparatus (10, 10', 10") comprising a toilet base (12) for a toilet, such as for an electric toilet, in particular an electric marine toilet or a recreational vehicle electric toilet, and a motor and pump assembly (14) coupled to the toilet base (12), comprising:
the toilet base (12) having a wall (12a) forming a chamber (12b) for receiving waste, the wall (12a) having a toilet base coupling portion (12c);
the pump and motor assembly (14) having a pump inlet (14a) configured to receive the waste pumped from the chamber (12b), the pump inlet (14a) having a pump inlet coupling portion (14b) arranged inside the toilet base coupling portion (12c) when the pump and motor assembly (14) and the toilet base (12) are coupled together,
**characterized in that**
the apparatus (10, 10', 10") comprises a quick release coupling mechanism (20) having a clip receiving portion (22) and a clip (24) configured to slide within the clip receiving portion (22) from a disengage position to an engage position to engage the pump inlet coupling portion (14b) and couple the toilet base (12) and the pump and motor assembly (14) together, and also configured to slide from the engage position to the disengage position to disengage the pump inlet coupling portion (14b) and decouple the pump and motor assembly (14) from the toilet base (12).

2. Apparatus (10, 10', 10") according to claim 1, wherein the quick release coupling mechanism (20) is mounted on the toilet base (12), including mounted on the wall (12a) of the toilet base (12) or to the toilet base coupling portion (12c) of the toilet base (12).

3. Apparatus (10, 10', 10") according to claim 1 or 2, wherein
the clip receiving portion (22) has a slot (22a) configured or formed therein to receive the clip (24); and
the clip (24) is configured to slide within the slot (22a) of the clip receiving portion (22).

4. Apparatus (10, 10', 10") according to one of the preceding claims, wherein
the clip receiving portion (22) has an opening (22b) configured or formed therein;
the pump inlet coupling portion (14b) has a rim (b'; Mb') configured to pass through the opening (22b) formed in the clip receiving portion (22) and into the toilet base coupling portion (12c) of the toilet base (12); and
the clip (24) is configured to slide within the clip receiving portion (22) from the disengage position to the engage position to engage the rim (b'; Mb') to couple together the toilet base (12) and the pump and motor assembly (14).

5. Apparatus (10, 10', 10") according to one of the preceding claims, wherein the quick release coupling mechanism (20) comprises a spring (26) configured to expand when the clip (24) slides from the disengage position to the engage position to push and hold the clip (24) in the engage position, and also configured to compress when the clip (24) slides from the engage position to the disengage position to urge the spring (26) towards the engage position.

6. Apparatus (10, 10', 10") according to claim 4, wherein the clip (24) comprises a clip engaging portion (24c) configured to engage the rim (b'; Mb') when the clip (24) slides from the disengage position to the engage position, and also configured to disengage the rim (b'; Mb') when the clip (24) slides from the engage position to the disengage position.

7. Apparatus (10, 10', 10") according to claim 6, wherein the clip (24) comprises a clip release portion (24d) having an opening (24d') configured to allow the pump inlet coupling portion (14b) to pass thru when the clip (24) slides into the disengage position for releasing the pump and motor assembly (14) from the toilet base (12), and also for positioning the pump inlet coupling portion (14b) for engagement.

8. Apparatus (10, 10', 10") according to one of the preceding claims, wherein
the pump and motor assembly (14) comprises a pump outlet (14d) configured or formed thereon and being configured to provide the waste from the pump and motor assembly (14), the pump outlet (14d) having a pump outlet coupling portion (14e); and
the apparatus (10, 10', 10") comprises a discharge fitting (30) having a quick release discharge fitting coupling mechanism (32) with a discharge fitting clip receiving portion (34) and a discharge fitting clip (36), the discharge fitting clip (36) configured to slide within the discharge fitting clip receiving portion (34) from a discharge fitting disengage position to a discharge fitting engage position to engage the pump outlet coupling portion (14e) and couple the discharge fitting (30) and the pump and motor assembly (14) together, and also from the discharge fitting engage position to the discharge fitting disengage position to disengage the pump outlet coupling portion (14e) and decouple the discharge fitting (30) from the pump and motor assembly (14).

9. Apparatus (10, 10', 10") according to claim 8, wherein
the discharge fitting clip receiving portion (34) has a discharge fitting slot (34a) configured or formed therein to receive the discharge fitting clip (36); and
the discharge fitting clip (36) is configured to slide within the discharge fitting slot (34a).

10. Apparatus (10, 10', 10") according to claim 8, wherein
the discharge fitting clip receiving portion (34) has an opening (34b) configured or formed therein;
the pump outlet coupling portion (14e) optionally includes a pump outlet rim (14e') configured to pass through the opening (34b) formed in the discharge fitting clip receiving portion (34) and into the discharge fitting (30); and
the discharge fitting clip (36) is configured to slide within the discharge fitting clip receiving portion (34) from the pump outlet disengage position to the discharge fitting engage position to, in use, engage the pump outlet rim (14e') to couple together the pump and motor assembly (14) and the discharge fitting (30).

11. Apparatus (10, 10', 10") according to one of the claims 8 to 10, wherein the quick release discharge fitting coupling mechanism (32) comprises a discharge fitting spring (38) that is configured to expand when the discharge fitting clip (36) slides from the discharge fitting disengage position to the discharge fitting engage position to push and hold the discharge fitting clip (36) in the discharge fitting engage position, and also configured to compress when the discharge fitting clip (36) slides from the discharge fitting engage position to the discharge fitting disengage position to urge the discharge fitting spring (38) towards the discharge fitting engage position.

12. Apparatus (10, 10', 10") according to one of the claims 8 to 11, wherein the pump outlet coupling portion (14e) includes a pump outlet rim (14e'), and the discharge fitting clip (36) comprises a discharge fitting clip engaging portion (36c) configured to engage the pump outlet rim (14e') when the discharge fitting clip (36) slides from the discharge fitting disengage position to the discharge fitting engage position, and also configured to disengage the pump outlet rim (14e') when the discharge fitting clip (36) slides from the discharge fitting engage position to the discharge fitting disengage position.

13. Apparatus (10, 10', 10") according to one of the claims 8 to 12, wherein the discharge fitting clip (36) comprises a discharge fitting release portion (36d) having an opening (36d') configured to allow the pump outlet coupling portion (14e) to pass thru when the discharge fitting clip (36) slides into the discharge fitting disengage position for releasing the discharge fitting (30) from the pump and motor assembly (14), and for also positioning the pump outlet coupling portion (14e) for engagement.

## Patentansprüche

1. Vorrichtung (10, 10', 10") umfassend einen Toilettensockel (12) für eine Toilette, beispielsweise für eine elektrische Toilette, insbesondere eine elektrische Schiffstoilette oder eine elektrische Toilette für Freizeitfahrzeuge, und eine mit dem Toilettensockel (12) verbundene Motor- und Pumpenbaugruppe (14), umfassend:
der Toilettensockel (12), der eine Wand (12a) aufweist, die eine Kammer (12b) zur Aufnahme von Abwasser bildet, wobei die Wand (12a) einen Toilettensockel-Kupplungsabschnitt (12c) aufweist;
die Pumpen- und Motorbaugruppe (14), die einen Pumpeneinlass (14a) aufweist, der ausgebildet ist, das aus der Kammer (12b) gepumpte Abwasser aufzunehmen, wobei der Pumpeneinlass (14a) einen Pumpeneinlass-Kupplungsabschnitt (14b) aufweist, der innerhalb des Toilettensockel-Kupplungsabschnitts (12c) angeordnet ist, wenn die Pumpen- und Motorbaugruppe (14) und der Toilettensockel (12) miteinander verbunden sind,
**dadurch gekennzeichnet, dass**
die Vorrichtung (10, 10', 10") einen Schnellkupplungsmechanismus (20) mit einem Clipaufnahmeabschnitt (22) und einem Clip (24) umfasst, der ausgebildet ist, innerhalb des Clipaufnahmeabschnitts (22) von einer Freigabeposition in eine Eingriffsposition zu gleiten, um mit dem Pumpeneinlass-Kupplungsabschnitt (14b) in Eingriff zu treten und den Toilettensockel (12) und die Pumpen- und Motorbaugruppe (14) miteinander zu koppeln, und der außerdem ausgebildet ist, von der Eingriffsposition in die Freigabeposition zu gleiten, um sich von dem Pumpeneinlass-Kupplungsabschnitt (14b) zu lösen und die Pumpen- und Motorbaugruppe (14) von dem Toilettensockel (12) zu entkoppeln.

2. Vorrichtung (10, 10', 10") nach Anspruch 1, wobei der Schnellkupplungsmechanismus (20) an dem Toilettensockel (12) angebracht ist, einschließlich wo er an der Wand (12a) des Toilettensockels (12) oder an dem Toilettensockel-Kupplungsabschnitt (12c) des Toilettensockels (12) angebracht ist.

3. Vorrichtung (10, 10', 10") nach Anspruch 1 oder 2, wobei
der Clipaufnahmeabschnitt (22) einen darin angeordneten oder geformten Schlitz (22a) aufweist, um den Clip (24) aufzunehmen; und
der Clip (24) ausgebildet ist, innerhalb des Schlitzes (22a) des Clipaufnahmeabschnitts (22) zu gleiten.

4. Vorrichtung (10, 10', 10") nach einem der vorhergehenden Ansprüche, wobei
der Clipaufnahmeabschnitt (22) eine darin angeordneten oder geformte Öffnung (22b) aufweist;
der Pumpeneinlass-Kupplungsabschnitt (14b) einen Rand (b'; Mb') aufweist, der ausgebildet ist, durch die in dem Clipaufnahmeabschnitt (22) ausgebildete Öffnung (22b) hindurch und in den Toilettensockel-Kupplungsabschnitt (12c) des Toilettensockels (12) hinein zu ragen; und
der Clip (24) ausgebildet ist, innerhalb des Clipaufnahmeabschnitts (22) von der Freigabeposition in die Eingriffsposition zu gleiten, um mit dem Rand (b'; Mb') in Eingriff zu treten, um den Toilettensockel (12) und die Pumpen- und Motorbaugruppe (14) miteinander zu koppeln.

5. Vorrichtung (10, 10', 10") nach einem der vorhergehenden Ansprüche, wobei der Schnellkupplungsmechanismus (20) eine Feder (26) umfasst, die ausgebildet ist, sich auszudehnen, wenn der Clip (24) von der Freigabeposition in die Eingriffsposition gleitet, um den Clip (24) in die Eingriffsposition zu drücken und dort zu halten, und die außerdem ausgebildet ist, sich zusammenzuziehen, wenn der Clip (24) von der Eingriffsposition in die Freigabeposition gleitet, um die Feder (26) in Richtung der Eingriffsposition zu drücken.

6. Vorrichtung (10, 10', 10") nach Anspruch 4, wobei der Clip (24) einen Clipeingriffsabschnitt (24c) umfasst, der ausgebildet ist, mit dem Rand (b'; Mb') in Eingriff zu treten, wenn der Clip (24) von der Freigabeposition in die Eingriffsposition gleitet, und der außerdem ausgebildet ist, sich von dem Rand (b'; Mb') zu lösen, wenn der Clip (24) von der Eingriffsposition in die Freigabeposition gleitet.

7. Vorrichtung (10, 10', 10") nach Anspruch 6, wobei der Clip (24) einen Clipfreigabeabschnitt (24d) mit einer Öffnung (24d') aufweist, die ausgebildet ist, es dem Pumpeneinlass-Kupplungsabschnitt (14b) zu ermöglichen hindurchzupassen, wenn der Clip (24) in die Freigabeposition gleitet, um die Pumpen- und Motorbaugruppe (14) von dem Toilettensockel (12) zu entkoppeln, und außerdem, um den Pumpeneinlass-Kupplungsabschnitt (14b) zum Eingreifen zu positionieren.

8. Vorrichtung (10, 10', 10") nach einem der vorhergehenden Ansprüche, wobei
die Pumpen- und Motorbaugruppe (14) einen Pumpenauslass (14d) umfasst, der daran angeordnet oder geformt und ausgebildet ist, das Abwasser aus der Pumpen- und Motorbaugruppe (14) bereitzustellen, wobei der Pumpenauslass (14d) einen Pumpenauslass-Kupplungsabschnitt (14e) aufweist; und
die Vorrichtung (10, 10', 10") ein Auslassanschlussteil (30) mit einem Schnellverschluss-Auslassanschlussteil-Kupplungsmechanismus (32) mit einem Auslassanschlussteil-Clip-Aufnahmeabschnitt (34) und einem Auslassanschlussteil-Clip (36) umfasst, wobei der Auslassanschlussteil-Clip (36) ausgebildet ist, innerhalb des Auslassanschlussteil-Clip-Aufnahmeabschnitts (34) von einer Auslassanschlussteil-Freigabeposition in eine Auslassanschlussteil-Eingriffsposition zu gleiten, um mit dem Pumpenauslass-Kupplungsabschnitt (14e) in Eingriff zu treten und das Auslassanschlussteil (30) und die Pumpen- und Motorbaugruppe (14) miteinander zu koppeln, und außerdem von der Auslassanschlussteil-Eingriffsposition in die Auslassanschlussteil-Freigabeposition zu gleiten, um sich von dem Pumpenauslass-Kupplungsabschnitt (14e) zu lösen und das Auslassanschlussteil (30) von der Pumpen- und Motorbaugruppe (14) zu entkoppeln.

9. Vorrichtung (10, 10', 10") nach Anspruch 8, wobei
der Auslassanschlussteil-Clip-Aufnahmeabschnitt (34) einen Auslassanschlussteil-Schlitz (34a) aufweist, der darin angeordnet oder geformt ist, um den Auslassanschlussteil-Clip (36) aufzunehmen; und
der Auslassanschlussteil-Clip (36) ausgebildet ist, innerhalb des Auslassanschlussteil-Schlitzes (34a) zu gleiten.

10. Vorrichtung (10, 10', 10") nach Anspruch 8, wobei
der Auslassanschlussteil-Clip-Aufnahmeabschnitt (34) eine darin angeordnete oder geformte Öffnung (34b) aufweist;
der Pumpenauslass-Kupplungsabschnitt (14e) optional einen Pumpenauslassrand (14e') umfasst, der ausgebildet ist, durch die in dem Auslassanschlussteil-Clip-Aufnahmeabschnitt (34) ausgebildete Öffnung (34b) hindurch und in das Auslassanschlussteil (30) hinein zu ragen; und
der Auslassanschlussteil-Clip (36) ausgebildet ist, innerhalb des Auslassanschlussteil-Clip-Aufnahmeabschnitts (34) von der Pumpenauslassanschluss-Freigabeposition in die Auslassanschlussteil-Eingriffsposition zu gleiten, um - während des Gebrauchs - mit dem Pumpenauslassrand (14e') in Eingriff zu treten und die Pumpen- und Motorbaugruppe (14) und das Auslassanschlussteil (30) miteinander zu koppeln.

11. Vorrichtung (10, 10', 10") nach einem der Ansprüche 8 bis 10, wobei der Schnellverschluss-Auslassanschlussteil-Kupplungsmechanismus (32) eine Auslassanschlussteil-Feder (38) umfasst, die ausgebildet ist, sich auszudehnen, wenn der Auslassanschlussteil-Clip (36) von der Auslassanschlussteil-Freigabeposition in die Auslassanschlussteil-Eingriffsposition gleitet, um den Auslassanschlussteil-Clip (36) in die Auslassanschlussteil-Eingriffsposition zu drücken und dort zu halten, und die außerdem ausgebildet ist, sich zusammenzuziehen, wenn der Auslassanschlussteil-Clip (36) von der Auslassanschlussteil-Eingriffsposition in die Auslassanschlussteil-Freigabeposition gleitet, um die Auslassanschlussteil-Feder (38) in Richtung der Auslassanschlussteil-Eingriffsposition zu drücken.

12. Vorrichtung (10, 10', 10") nach einem der Ansprüche 8 bis 11, wobei der Pumpenauslass-Kupplungsabschnitt (14e) einen Pumpenauslassrand (14e') umfasst und der Auslassanschlussteil-Clip (36) einen Auslassanschlussteil-Clipeingriffsabschnitt (36c) umfasst, der ausgebildet ist, mit dem Pumpenauslassrand (14e') in Eingriff zu treten, wenn der Auslassanschlussteil-Clip (36) von der Auslassanschlussteil-Freigabeposition in die Auslassanschlussteil-Eingriffsposition gleitet, und der außerdem ausgebildet ist, sich von dem Pumpenauslassrand (14e') zu lösen, wenn der Auslassanschlussteil-Clip (36) von der Auslassanschlussteil-Eingriffsposition in die Auslassanschlussteil-Freigabeposition gleitet.

13. Vorrichtung (10, 10', 10") nach einem der Ansprüche 8 bis 12, wobei der Auslassanschlussteil-Clip (36) einen Auslassanschlussteil-Freigabeabschnitt (36d) mit einer Öffnung (36d') aufweist, die ausgebildet ist, es dem Pumpenauslass-Kupplungsabschnitt (14e) zu ermöglichen hindurch zu ragen, wenn der Auslassanschlussteil-Clip (36) in die Auslassanschlussteil-Freigabeposition gleitet, um das Auslassanschlussteil (30) von der Pumpen- und Motorbaugruppe (14) zu lösen, und außerdem um den Pumpenauslass-Kupplungsabschnitt (14e) für den Eingriff zu positionieren.

## Revendications

1. Appareil (10, 10', 10") comprenant une base de toilettes (12) pour des toilettes, telles que des toilettes électriques, en particulier des toilettes électriques marines ou des toilettes électriques pour véhicules récréatifs, et un ensemble moteur et pompe (14) couplé à la base de toilettes (12), comprenant :
la base de toilettes (12) comportant une paroi (12a) formant une chambre (12b) destinée à recevoir des eaux usées, la paroi (12a) comportant une partie de raccordement de base de toilettes (12c) ;
l'ensemble pompe et moteur (14) comportant une entrée de pompe (14a) configurée pour recevoir les eaux usées pompés depuis la chambre (12b), l'entrée de pompe (14a) comportant une partie de raccordement d'entrée de pompe (14b) disposée à l'intérieur de la partie de raccordement de base de toilettes (12c) lorsque l'ensemble pompe et moteur (14) et la base de toilettes (12) sont couplés ensemble,
**caractérisé en ce que**
l'appareil (10, 10', 10") comprend un mécanisme d'accouplement à dégagement rapide (20) comportant une partie de réception de clip (22) et un clip (24) configuré pour coulisser à l'intérieur de la partie de réception de clip (22) d'une position de désengagement à une position d'engagement afin de s'engager avec la partie de raccordement d'entrée de pompe (14b) et accoupler la base de toilettes (12) et l'ensemble pompe et moteur (14) ensemble, et également configuré pour coulisser de la position d'engagement à la position de désengagement afin de se désengager de la partie de raccordement d'entrée de pompe (14b) et de désaccoupler l'ensemble pompe et moteur (14) de la base de toilettes (12).

2. Appareil (10, 10', 10") selon la revendication 1, dans lequel le mécanisme d'accouplement à dégagement rapide (20) est monté sur la base de toilettes (12), y compris monté sur la paroi (12a) de la base de toilettes (12) ou sur la partie de raccordement de base de toilettes (12c) de la base de toilettes (12).

3. Appareil (10, 10', 10") selon la revendication 1 ou 2, dans lequel
la partie de réception de clip (22) comporte une fente (22a) configurée ou formée dans celle-ci pour recevoir le clip (24) ; et
le clip (24) est configuré pour coulisser à l'intérieur de la fente (22a) de la partie de réception de clip (22).

4. Appareil (10, 10', 10") selon l'une des revendications précédentes, dans lequel
la partie de réception de clip (22) comporte une ouverture (22b) configurée ou formée dans celle-ci ;
la partie de raccordement d'entrée de pompe (14b) comporte un rebord (b' ; Mb') configuré pour passer à travers l'ouverture (22b) formée dans la partie de réception de clip (22) et dans la partie de raccordement de base de toilettes (12c) de la base de toilettes (12) ; et
le clip (24) est configuré pour coulisser à l'intérieur de la partie de réception de clip (22) de la position de désengagement à la position d'engagement afin de s'engager avec le rebord (b'; Mb') afin de coupler ensemble la base de toilettes (12) et l'ensemble pompe et moteur (14).

5. Appareil (10, 10', 10") selon l'une des revendications précédentes, dans lequel le mécanisme d'accouplement à dégagement rapide (20) comprend un ressort (26) configuré pour se dilater lorsque le clip (24) coulisse de la position de désengagement à la position d'engagement afin de pousser et de maintenir le clip (24) dans la position d'engagement, et également configuré pour se comprimer lorsque le clip (24) coulisse de la position d'engagement à la position de désengagement afin de pousser le ressort (26) vers la position d'engagement.

6. Appareil (10, 10', 10") selon la revendication 4, dans lequel le clip (24) comprend une partie d'engagement du clip (24c) configurée pour s'engager avec le rebord (b' ; Mb') lorsque le clip (24) coulisse de la position de désengagement à la position d'engagement, et également configurée pour se désengager du rebord (b' ; Mb') lorsque le clip (24) coulisse de la position d'engagement vers la position de désengagement.

7. Appareil (10, 10', 10") selon la revendication 6, dans lequel le clip (24) comprend une partie de libération de clip (24d) ayant une ouverture (24d') configurée pour permettre à la partie de raccordement d'entrée de pompe (14b) de passer lorsque le clip (24) coulisse dans la position de désengagement afin de libérer l'ensemble pompe et moteur (14) de la base de toilettes (12), et également pour positionner la partie de raccordement d'entrée de pompe (14b) pour l'engagement.

8. Appareil (10, 10', 10") selon l'une des revendications précédentes, dans lequel
l'ensemble pompe et moteur (14) comprend une sortie de pompe (14d) configurée ou formée sur celui-ci et configurée pour fournir les eaux usées provenant de l'ensemble pompe et moteur (14), la sortie de pompe (14d) comportant une partie de raccordement de sortie de pompe (14e) ; et
l'appareil (10, 10', 10") comprend un raccord de décharge (30) ayant un mécanisme d'accouplement de raccord de décharge à dégagement rapide (32) avec une partie de réception de clip de raccord de décharge (34) et un clip de raccord de décharge (36), le clip de raccord de décharge (36) étant configuré pour coulisser à l'intérieur de la partie de réception de clip de raccord de décharge (34) depuis une position de désengagement du raccord de décharge vers une position d'engagement du raccord de décharge afin de s'engager avec la partie de raccordement de sortie de pompe (14e) et de coupler le raccord de décharge (30) et l'ensemble pompe et moteur (14) ensemble, et également de la position d'engagement du raccord de décharge vers la position de désengagement du raccord de décharge afin de se désengager de la partie de raccordement de sortie de pompe (14e) et découpler le raccord de décharge (30) de l'ensemble pompe et moteur (14).

9. Appareil (10, 10', 10") selon la revendication 8, dans lequel
la partie de réception de clip de raccord de décharge (34) comporte une fente de raccord de décharge (34a) configurée ou formée dans celle-ci pour recevoir le clip de raccord de décharge (36) ; et
le clip de raccord de décharge (36) est configuré pour coulisser à l'intérieur de la fente de raccord de décharge (34a).

10. Appareil (10, 10', 10") selon la revendication 8, dans lequel
la partie de réception de clip de raccord de décharge (34) comporte une ouverture (34b) configurée ou formée dans celle-ci ;
la partie de raccordement de sortie de pompe (14e) comprend éventuellement un rebord de sortie de pompe (14e') configuré pour passer à travers l'ouverture (34b) formée dans la partie de réception de clip de raccord de décharge (34) et dans le raccord de décharge (30) ; et
le clip de raccord de décharge (36) est configuré pour coulisser à l'intérieur de la partie de réception de clip de raccord de décharge (34) depuis la position de désengagement du raccord de décharge de la pompe jusqu'à la position d'engagement du raccord de décharge afin, en utilisation, de se engager avec le rebord de sortie de pompe (14e') pour coupler ensemble l'ensemble pompe et moteur (14) et le raccord de décharge (30).

11. Appareil (10, 10', 10") selon l'une des revendications 8 à 10, dans lequel le mécanisme d'accouplement de raccord de décharge à dégagement rapide (32) comprend un ressort de raccord de décharge (38) qui est configuré pour se dilater lorsque le clip de raccord de décharge (36) coulisse de la position de désengagement du raccord de décharge vers la position d'engagement du raccord de décharge afin de pousser et de maintenir le clip de raccord de décharge (36) dans la position d'engagement du raccord de décharge, et également configuré pour se comprimer lorsque le clip de raccord de décharge (36) coulisse de la position d'engagement du raccord de décharge vers la position de désengagement du raccord de décharge afin de pousser le ressort de raccord de décharge (38) vers la position d'engagement du raccord de décharge.

12. Appareil (10, 10', 10") selon l'une des revendications 8 à 11, dans lequel la partie de raccordement de sortie de pompe (14e) comprend un rebord de sortie de pompe (14e'), et le clip de raccord de décharge (36) comprend une partie d'engagement de clip de raccord de décharge (36c) configurée pour s'engager avec le rebord de sortie de pompe (14e') lorsque le clip de raccord de décharge (36) coulisse de la position de désengagement du raccord de décharge vers la position d'engagement du raccord de décharge, et également configurée pour se désengager du rebord de sortie de pompe (14e') lorsque le clip de raccord de décharge (36) coulisse de la position d'engagement du raccord de décharge vers la position de désengagement du raccord de décharge.

13. Appareil (10, 10', 10") selon l'une des revendications 8 à 12, dans lequel le clip de raccord de décharge (36) comprend une partie de libération de raccord de décharge (36d) ayant une ouverture (36d') configurée pour permettre à la partie de raccordement de sortie de pompe (14e) de passer lorsque le clip de raccord de décharge (36) coulisse vers la position de désengagement du raccord de décharge afin de libérer le raccord de décharge (30) de l'ensemble pompe et moteur (14), et également de positionner la partie de raccordement de sortie de pompe (14e) pour l'engagement.
